# EUROPÄISCHE PATENTSCHRIFT

(11) **EP 1 040 632 B1**
(45) Veröffentlichungstag und Bekanntmachung des Hinweises auf die Patenterteilung: **18.08.2004**
(21) Anmeldenummer: 98966258.0
(22) Anmeldetag: 07.12.1998
(51) Int. Cl.: H04L 29/06, H04L 12/28

(54) **Verfahren und System zur Unterstützung von Mobilität im Internet und Server in einem Home-Netz eines mobilen Teilnehmers**
Method and system for supporting mobility on the internet and server in a home network of a mobile subscriber
Procédé et système d'assistance de mobilité sur l'internet et serveur dans un réseau local d'un abonné

(30) Priorität: 19.12.1997 EP 97122541
(43) Veröffentlichungstag der Anmeldung: 04.10.2000
(73) Patentinhaber: SIEMENS AKTIENGESELLSCHAFT, 80333 München (DE)
(72) Erfinder: DAS, Chandan, D-82131 Gauting (DE); GREMMELMAIER, Ulrich, D-82110 Germering (DE)
(86) Internationale Anmeldenummer: PCT/EP1998/007944
(87) Internationale Veröffentlichungsnummer: WO 1999/033239

(56) Entgegenhaltungen:
- WO-A-97/04611
- GIOVANARDI A ET AL: "Transparent mobile IP: an approach and implementation" GLOBECOM 97. IEEE GLOBAL TELECOMMUNICATIONS CONFERENCE. CONFERENCE RECORD (CAT. NO.97CH36125), GLOBECOM 97. IEEE GLOBAL TELECOMMUNICATIONS CONFERENCE. CONFERENCE RECORD, PHOENIX, AZ, USA, 3-8 NOV. 1997, Seiten 1861-1865 vol.3, XP002068554 ISBN 0-7803-4198-8, 1997, NEW YORK, NY, USA, IEEE, USA
- CHARLES E. PERKINS: "Mobile IP" IEEE COMMUNICATIONS MAGAZINE, Bd. 35, Nr. 5, Mai 1997 (1997-05), Seiten 84-99, XP0000657114 USA

## Beschreibung

In heutigen Netzen ist die Unterstützung von Mobilität nur in dedizierten Bereichen des Netzes möglich und damit nur sehr eingeschränkt möglich. Um uneingeschränkte Teilnehmermobilität (persönliche Mobilität) zu unterstützen, sind daher erweiterte Netzmechanismen erforderlich. Dabei wird von einem Teilnehmer ausgegangen, der bei einem oder mehreren Internet Service Providern (ISPs) bzw. Unternehmens-Netzen, als Teilnehmer registriert ist. Mobilität bezeichnet die Bewegung des Teilnehmers über Netzgrenzen hinweg, d.h. auch in Netze beliebiger anderer ISPs bzw. Unternehmen hinein.

Die Erfindung betrifft ein Verfahren zur Unterstützung persönlicher Mobilität, womit die Verfügbarkeit von Diensten an Endgeräten, die prinzipiell an beliebigen Zugangsknoten für das Internet, angeschlossen sind, ermöglicht wird. Zur Kennzeichung persönlicher Mobilität besitzt der Teilnehmer eine Identität (Kennung), die z. B. durch logische Adressen, z.B. ähnlich dem Email-Format, dargestellt werden kann. Grundlegend sollen universelle (d. h. keine speziell konfigurierten Terminals) eingesetzt werden können, wie z.B. standardmäßig eingerichtete PCs im Hotelzimmer, in Konferenzräumen oder in Internet-Cafes, oder auch mitgeführte Notebooks.

Im Internet und damit innerhalb der Internet Engineering Task Force (IETF) sind zwei Verfahren bekannt, die eingeschränkte Mobilität ermöglichen:
a) Roaming Capabilities (Arbeitsgruppe Roaming Operations innerhalb der IETF):
   Roaming Agreements zwischen ISPs ermögichen Internetzugang an den lokalen Einwahlknoten der vertragsmäßig gebundenen ISPs
b) Endgerätemobilität (Terminal Mobility, Arbeitsgruppe Mobile-IP innerhalb der IETF):
   Sie ermöglicht Mobilität zwischen lokalen Netzen (LANs), die über das Internet miteinander verbunden sind, wobei sich ein Endgerät mit einer fest zugeordneten Adresse von einem Standort zu einem anderen bewegt (siehe z.B.[1]).

Obige Verfahren a) und b) unterstützen jedoch nur eingeschränkte Mobilität:
zu a): Dieses Verfahren bietet nur Unterstützung bzgl. Authentifizierung und Abrechnung. Es ermöglicht damit Zugang zu fremden ISPs, jedoch nur mit den dort angebotenen Diensten. In diesem Fall wird dem Teilnehmer eine temporäre Adresse zugewiesen, die weder im Home-Netz noch sonstwo im Internet unmittelbar bekannt wird, d.h. es ist nicht möglich, Nachrichten zu empfangen oder Dienste zu nutzen, ohne vorher seine derzeitige temporäre Adresse dem jeweiligen Kommunikationspartner bekanntgegeben zu haben.
zu b): Bei diesem Verfahren muß das fremde Netz ein LAN sein. Das zu verwendende Terminal muß speziell für Mobile IP konfiguriert sein. Dabei ist das Terminal fest an eine bestimmte Adresse aus dem Home-Netz gebunden. Für mehrere Home-Netze ist jeweils eine eigene Konfiguration erforderlich. Daher gibt es hier keine Flexibiltät bzgl. freier Endgerätewahl.

Der Erfindung liegt die Aufgabe zugrunde, die vollständige Unterstützung von Mobilität zu gewährleisten.

Diese Aufgabe wird durch ein Verfahren nach Anspruch 1, durch einen Server Agent nach Anspruch 7 und durch ein System nach Anspruch 10 gelöst.

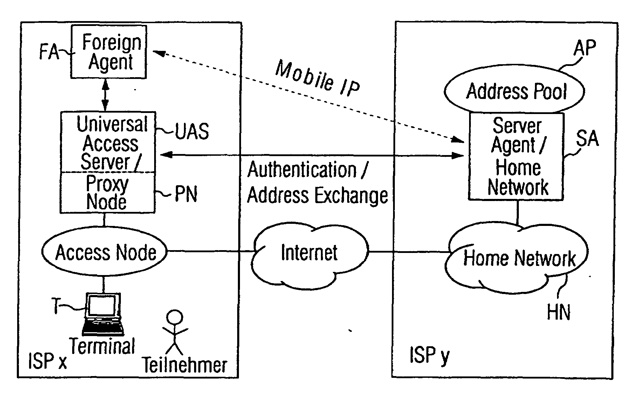

Im folgenden wird ein Ausführungsbeispiel der Erfindung anhand der Zeichnung näher erläutert, wobei die Zeichnung eine Figur umfaßt.

Für das Verfahren zur Unterstützung persönlicher Mobilität sind folgende Komponenten wesentlich:
Neue Komponenten und Funktionalitäten:
   Der mobile Teilnehmer wählt sich über ein Terminal in einen Zugangsknoten eines fremden Netzes ein. Der Zugangsknoten verbindet ihn mit einem Netzknoten (Universellen Access Server / Proxy Node, kurz UAS/PN) der folgende Funktionalität aufweist.

- Authentifizierung des Teilnehmers:
   Es findet eine Authentifizierung zwischen UAS/PN und dem Server Agent im Home-Netz (SA) statt. Diese könnte optional auch über ein ausgelagertes Authentication Center (ein dedizierter Server) stattfinden.
- Abfrage nach IP-Adresse:
   Der Server Agent im HN empfängt eine mit einer Benutzerkennung (Teilnehmer-Identität) gekennzeichnete Anfrage des UAS/PN nach einer IP-Adresse für das Terminal des mobilen Teilnehmers. Der UAS/PN kann aus einem Teil der Teilnehmerkennung (bei E-Mail-Adressen der sog. Domain Name) über den Domain Name Service DNS (meist eine Kette von Name-Servern) denjenigen SA (als IP-Adresse) ermitteln, der für den Teilnehmer zuständig ist. Dann wird über ein entsprechendes Authentifizierungs- und Adreßabfrageprotokoll der SA angefragt. Bei dieser Anfrage wird die IP-Adresse des UAS/PN automatisch auf Applikationsebene bereitgestellt (sie ist ja in jedem, vom UAS/PN gesendeten IP Paket vorhanden).

Das Authentifizierungs- und Adreßabfrageprotokoll läßt sich wie folgt skizzieren: In einem ersten Schritt überprüft der UAS/PN beim SA, ob der Teilnehmer existiert (evtl auch ein entsprechendes Paßwort besitzt) und ob der Netzbetreiber des Home-Netzes auch die Rechnung für die Nutzung der Dienste des UAS/PN übernimmt (Accounting). Dies muß vom SA bestätigt werden. Ist das nicht der Fall, erhält der Teilnehmer keine Zugangsberechtigung. In einem zweiten Schritt fordert der UAS/PN eine IP-Adresse für das Terminal des Teilnehmers an. Diese muß dann vom SA geliefert werden. Fehlerbehandlungsmechanismen wie etwa Wiederholung von Anfragen, falls eine Bestätigung ausbleibt, werden dabei berücksichtigt.
- Funktionalität des SA: Mapping-Funktionalität
   Der Server Agent stellt nach dem Erhalt der genannten Anfrage eine Adresse aus einem vorhandenen Adreßpool zur Verfügung und überträgt diese zum UAS/PN. Dieser Adreßpool umfaßt entweder vorhandene IP-Adressen für reale Rechner im HN oder einen virtuell vorhandenen Adreßraum für die dynamische Adreßvergabe. Beim SA ist damit eine Assoziation zwischen der Identität des Teilnehmers und der IP-Adresse hergestellt (Mapping). Dies ist als Voraussetzung für die Erreichbarkeit des Teilnehmers unter seiner Identität über das Terminal notwendig.

Für die genannte Mapping-Funktionalität sind folgende Mittel bereitzustellen:
- ein Protokoll zum Austausch von IP-Adressen zwischen UAS/PN und SA
- eine Assoziationstabelle zwischen IP-Adressen und Identität

Die genannten Funktionalitäten sind für die Registrierung des Teilnehmers und die Adressierung des Terminals erforderlich. Sie stellen damit eine Vorbereitungsphase für den eigentlichen Nutzdatenaustausch dar. Für den Nutzdatenaustausch ist die folgende Funktionalität des UAS/PN nötig:
- Proxy Node (Proxy Mobile Node):
   Diese Funktionalität repräsentiert das Terminal zum Internet hin mit der spezifischen Identität des Teilnehmers. Das Terminal besitzt Zugang zum UAS/PN über einen Zugangsknoten.

Die Kommunikationsverbindung zum UAS/PN kann über StandardVerfahren eingerichtet werden, z.B. Point-to-Point- Protokoll PPP. Hierzu wird dem Terminal vom UAS/PN eine IP-Adresse zugewiesen. Diese IP-Adresse ist entweder die vom SA empfangene IP-Adresse oder eine vom UAS/PN lokal neu bestimmt IP-Adresse. In dem letzteren Fall muß der UAS/PN eine IP-Adreßumsetzung vornehmen (Von dem Terminal an den UAS/PN versendete IP-Pakete packt die PN-Komponente des UAS/PN wieder aus und versieht sie mit der vom SA zugewiesenen IP-Adresse als Absender). Der UAS/PN, d.h. die PN-Komponente, benutzt das bereits bekannte Prinzip des Mobile IP [1], um den Teilnehmer in die Lage zu versetzen, mit seinem Terminal alle Dienste des Internets zu nutzen, als wäre das Terminal am HN angeschlossen. Das Prinzip des Mobile IP wird im folgenden kurz erläutert:

Zur Realisierung von Mobile IP (Terminal Mobility) werden in der Regel drei Komponenten benutzt: Mobile Node (MN), Home Agent (HA) und gegebenenfalls Foreign Agent (FA). Der MN ist ein Endgerät / Terminal, das seinen Anschlußpunkt in einem Home-Netz zu einem anderen Anschlußpunkt in einem Foreign-Netz ändert, wobei die IP-Adresse beibehalten wird. Der HA im Home-Netz leitet Pakete für den MN über einen Tunnel (gekennzeichnet durch zwei Endpunkte, d. h. IP-Adressen) , der am FA endet, zum MN weiter, wenn sich der MN im Foreign-Netz befindet. Der FA stellt Routingdienste für den MN bereit: Weiterleitung der Pakete, die vom HA kommen, sowie Routerfunktion für Pakete, die vom MN kommen. Mit Hilfe dieser Komponenten wird transparent Endgerätemobilität bereitgestellt.

Für die Erfindung ist des weiteren die Funktionalität des Home Agents erforderlich, die in den SA integriert ist.

Durch die Erfindung wird erreicht, daß der mobile Teilnehmer in einem fremden Netz unter seiner HN-Identität sowohl Nachrichten empfangen als auch versenden kann. Verläßt der Teilnehmer seinen temporär eingenommenen Standort, so wird es dem SA bekanntgemacht. Dies kann durch vielfältige Maßnahmen geschehen wie z.B.:
- aktives Austragen aus der Assoziationstabelle des SA bei Standortwechsel. Dies wird z.B. veranlaßt, sobald sich der Teilnehmer aus dem Terminal auslogged.
- zeitgesteuertes Löschen aus der Assoziationstabelle des SA, falls der Teilnehmer für längere Zeit keine Dienste in Anspruch nimmt.

Wenn das Terminal selbst ein Host (Netzrechner, Netzknoten) ist, entfällt die PN-Komponente. Das Terminal, das dann auch ein Mobile Node nach Mobile IP ist, und der UAS können dann bzgl. ihrer Funktionalität auf einem Host realisiert werden; die UAS-Funktion kann im Prinzip ein geschützter Softwareprozeß sein. Es könnte aber auch einen getrennten Server für den UAS geben. Dann benötigt das Terminal eine Client-Funktion zur Kommunikation mit dem UAS.

Es folgt nun die Erläuterung der Anwendungsumgebung der Erfindung sowie das Zusammenspiel der Komponenten zur Durchführung der Erfindung.

Der Teilnehmer befindet sich üblicherweise im Home-Netz (HN). Wenn er mobil ist, möchte er von anderer Stelle aus über ein beliebiges Terminal mit Zugangsmöglichkeit ins Internet mit anderen Teilnehmern kommunizieren (z.B. Voice over Internet) oder generell Internet-Dienste nutzen. Befindet sich der Teilnehmer in einem fremden Netz, wird ihm dort in der Regel ein Terminal oder ein Anschluß bereitgestellt (z.B. PC mit Einwahlmöglichkeit). Der Teilnehmer möchte nun auch von dort aus seine Zuhause gewohnten Dienste benutzen oder explizit auf die Ressourcen in seinem HN zugreifen. Darüber hinaus möchte er auch von anderen Teilnehmern unter seiner allgemein bekannten Identität erreicht werden. Dazu geht der Teilnehmer wie folgt vor:

Der mobile Teilnehmer meldet sich über ein Terminal an einem Zugangsknoten (Access Node) eines (fremden) Internet Service Providers (ISP x) an. Dazu gibt er seine Benutzerkennung, beispielsweise in Form einer E-Mail Adresse, ein. Die Benutzerkennung wird vom UAS/PN entgegengenommen. Der UAS/PN ermittelt daraus (z. B. mit Hilfe des im Internet verwendeten Domain Name Service) die Adresse des Server Agents (SA) im. Home-Netz (ISP y). Über ein spezielles Authentifizierungsprotokoll wird der mobile Teilnehmer vom SA identifiziert. Dann wird aus dem Adressenpool, der dem SA zur Verfügung steht, eine IP-Adresse entnommen. Der SA trägt die Verknüpfung "Benutzerkennung - IP-Adresse" in eine Assoziationstabelle ein und übermittelt dem UAS/PN die IP Adresse über ein spezielles Protokoll. Damit verbunden kann auch ein spezifisches Nutzerprofil übermittelt werden.

Nun weist der UAS/PN dem Terminal die IP-Adresse zu und aktiviert die Proxy-Mobile-Node-Komponente. Diese meldet sich beim Foreign Agent (Mobile IP) an. Gemäß den Mechanismen von Mobile IP wird ein Kommunikationspfad zwischen SA im Home-Netz, dem Foreign Agent und dem Proxy Mobile Node eingerichtet. Dabei meldet sich der Proxy Mobile Node in Vertretung des Teilnehmers beim Foreign Agent an und teilt ihm die Adresse des SA im Home-Netz mit. Dann wird der Tunnel zwischen Foreign Agent und Home Agent eingerichtet sowie die vom Proxy Mobile Node angegebene Quelladresse überprüft. Ist dieser Vorgang erfolgreich, d. h. der oben genannte Kommunikationspfad ist eingerichtet, wird eine Kommunikationsverbindung zwischen UAS/PN und Terminal über den Zugangsknoten hinweg eingerichtet (beispielsweise mit dem Standardverfahren Point-to-Point-Protocol, PPP). Treffen nunmehr Datenpakete von anderen Kommunikationsteilnehmern beim Proxy Mobile Node ein, können diese direkt zum Terminal, an dem sich der mobile Teilnehmer befindet, weitergeleitet werden. Der mobile Teilnehmer ist nunmehr also von jedem Internet-Zugang aus weltweit erreichbar. Bei Anwendungen wie der Telefonie über das Internet kann der mobile Teilnehmer nun auch jederzeit angerufen werden.

Das Terminal kann ferner temporär in eine (zu im Home-Netz benutzten Diensten virtuell gleichwertige) Arbeitsumgebung für den mobilen Teilnehmer umgewandelt werden. Hierzu sind Protokolle geeignet, wie sie z.B. aus dem Bereich lokaler Netze für X-Terminals bekannt sind. Für diese Protokolle genügt eine Ziel-IP-Adresse, um die graphische Ausgabe auf ein anderes Terminal umzulenken. Dann steht dem mobilen Teilnehmer eine Auswahl an Diensten (Videotelefonie, Nachrichtendienste, etc.) wie zu Hause gewohnt zur Verfügung.

Beendet der Mobile Teilnehmer seine Tätigkeit, logged er sich aus dem Terminal aus. Typischerweise wird dann das Terminal wieder freigegeben, die temporäre IP-Adresse gelöscht und eine Meldung des Proxy Mobile Node an den SA im Home-Netz abgesetzt, so daß der Eintrag in der Assoziationstabelle gelöscht werden kann.

Die Erfindung weist folgende Attribute auf:
- Mobile Identität unabhängig von Internet-Adressen, realisiert durch die Assoziationstabelle des Server Agents im Home-Netz und durch den Adressaustausch zwischen Universellen Access Server / Proxy Node und Server Agent im Home-Netz.
- Mobile Kommunikation über das Internet von einem Standard Terminal aus, realisiert durch Funktionalitäten des Proxy Mobile Node
- Kombination mit dem bestehenden Verfahren "Mobile IP"
- Die Erfindung beinhaltet als Teilmenge auch reines Roaming, d. h. ein Übereinkommen zwischen zwei Netzbetreibern (ISPs), daß in einem fremden Netz z. B. ein Internet-Zugang zur Verfügung gestellt wird und dessen Nutzung abgerechnet werden kann.

Literatur:
[1] C. Perkins: Mobile IP. IEEE Communications Magazine, May 1997, pp. 84 - 99.

## Patentansprüche

1. Verfahren zur Unterstützung von Mobilität für einen Teilnehmer im Internet, wobei für den Teilnehmer die Dienstbereitschaft eines Terminals (T) hergestellt wird, welches einem von einem Home-Netz (HN) des Teilnehmers verschiedenen, fremden Netz (ISP x) zugeordnet ist, mit folgenden Verfahrensschritten:
- Entgegennehmen einer Benutzerkennung durch das Terminal,
- Bilden einer Anfrage, durch welche eine IP-Adresse für den Teilnehmer angefordert wird und welche die Benutzerkennung, die eine Teilnehmer-Identität des Teilnehmers widerspiegelt, aufweist, durch eine Internet-Zugangskomponente (UAS) im fremden Netz,
- Übermitteln der Anfrage an einen Server Agent (SA) im Home-Netz des Teilnehmers,
- Bereitstellen einer IP-Adresse für den Teilnehmer durch den Server Agent (SA),
- Übermitteln der bereitgestellten IP-Adresse an die Internet-Zugangskomponente (UAS), und
- Verknüpfen der bereitgestellten IP-Adresse mit der Teilnehmer-Identität.

2. Verfahren nach Anspruch 1,
**dadurch gekennzeichnet, dass**
die bereitgestellte IP-Adresse einer der Verbindung mit dem Terminal (T) zugeordneten Proxy-Node-Komponente (PN) übergeben wird, durch die daraufhin eine Kommunikationsbeziehung zu dem Server Agent (SA) im Home-Netz des Teilnehmers aufgebaut wird.

3. Verfahren nach Anspruch 2,
**dadurch gekennzeichnet, dass**
die Kommunikationsbeziehung zwischen der Proxy-Node-Komponente (PN) und dem Server Agent (SA) mittels des Protokolls Mobile IP aufgebaut wird, wobei die Kommunikationsbeziehung im fremden Netz (ISP x) durch einen der Proxy-Node-Komponente (PN) zugeordneten Foreign Agent (FA) und im Home-Netz durch einen in den Server Agent (SA) integrierten Home Agent terminiert wird.

4. Verfahren nach einem der Ansprüche 2 oder 3,
**dadurch gekennzeichnet, dass**
dem Terminal (T) von der Proxy-Node-Komponente (PN) die bereitgestellte IP-Adresse zugewiesen wird.

5. Verfahren nach einem der Ansprüche 2 oder 3,
**dadurch gekennzeichnet, dass**
- der Proxy-Node-Komponente (PN) die bereitgestellte IP-Adresse zugewiesen wird,
- dem Terminal (T) von der Proxy-Node-Komponente (PN) eine dem fremden Netz entnommene IP-Adresse zugewiesen wird, und
- eine Adressumsetzung zwischen der erfragten IP-Adresse und der dem fremden Netz entnommenen IP-Adresse durch die Proxy-Node-Komponente gespeichert und für die Kommunikation verwendet wird.

6. Verfahren nach einem der Ansprüche 1 bis 5,
**dadurch gekennzeichnet, dass**
der Server-Agent (SA) mit Hilfe des Domain Name System ermittelt wird.

7. Server Agent (SA) in einem Home-Netz eines mobilen Teilnehmers, der folgendes aufweist:
- Mittel zum Entgegennehmen einer Benutzerkennung, welche eine Teilnehmer-Identität widerspiegelt, von einer Internet-Zugangskomponente (UAS) eines fremden Netzes, durch welche eine IP-Adresse für den Teilnehmer angefordert wird,
- Mittel zum Bereitstellen einer IP-Adresse für den Teilnehmer,
- Mittel zum Übertragen der bereitgestellten IP-Adresse an die Internet-Zugangskomponente (UAS), und
- Mittel zum Verknüpfen der bereitgestellten IP-Adresse mit der Teilnehmer-Identität.

8. Server Agent nach Anspruch 7,
**gekennzeichnet durch**
- einen Adresspool (AP),
- Mittel zum Überprüfen der Berechtigung der Adress-Anforderung anhand der Benutzerkennung und Mittel zum Blockieren der Bereitstellung einer IP-Adresse bei fehlender Berechtigung, und
- eine Assoziationstabelle zum Speichern der Verknüpfung zwischen Teilnehmer-Identität und Adresse.

9. Server Agent nach Anspruch 8,
**dadurch gekennzeichnet, dass**
der genannte Adresspool (AP) reale IP-Adressen, bei denen es sich um Adressen für im Home-Netz real vorhandene Rechner handelt, und/oder virtuelle Adressen, bei denen es sich um Adressen ohne im Home-Netz real vorhandene Rechner handelt, für die dynamische Adressvergabe umfasst.

10. System zur Unterstützung von Mobilität für einen Teilnehmer im Internet, das folgendes aufweist:
- ein Terminal (T), welches einem von einem Home-Netz des Teilnehmers verschiedenen, fremden Netz (ISP x) zugeordnet ist und mit dem für den Teilnehmer Dienstbereitschaft hergestellt wird, das Terminal (T) ausgestattet mit Mitteln zum Entgegennehmen einer Benutzerkennung, welche eine Teilnehmer-Identität widerspiegelt,
- eine Internet-Zugangskomponente (UAS), angeordnet im fremden Netz (ISP x), welche folgendes aufweist:
- Mittel zum Stellen einer mit der Benutzerkennung versehenen Anfrage nach einer IP-Adresse für den Teilnehmer an einen Server-Agent (SA) im Home-Netz des Teilnehmers, und
- Mittel zum Entgegennehmen der IP-Adresse, und
- einen Server Agent (SA) im Home-Netz des Teilnehmers, der folgendes aufweist:
- Mittel zum Entgegennehmen der Benutzerkennung von der Internet-Zugangskomponente (UAS),
- Mittel zum Bereitstellen einer IP-Adresse für den Teilnehmer,
- Mittel zum Übertragen der bereitgestellten IP-Adresse an die Internet-Zugangskomponente (UAS),
- Mittel zum Verknüpfen der bereitgestellten IP-Adresse mit der Teilnehmer-Identität.

## Claims

1. Method of supporting mobility for a subscriber in the Internet, where the service availability of a terminal (T) which is assigned to a foreign network (ISP x) different from the subscriber's home network (HN), with the following procedural steps:
- Acceptance of a user id. by the terminal,
- Creation of a request through which an IP address for the subscriber is requested and which features a user identity which reflects the user identification of the subscriber through an Internet access component (UAS) in the foreign network,
- Transfer of the request to a Server Agent (SA) in the home network of the subscriber,
- Provision of an IP address for the subscriber by the Server Agent (SA),
- Transfer of the IP address provided to the Internet access component (UAS), and
- Linkage of the IP address provided with the subscriber identity.

2. Method according to Claim 1,
**characterized in that**
the IP address provided is transferred to a Proxy Node (PN) component assigned to the connection with the terminal (T) by which a communication link is then established to the Server Agent (SA) in the home network of the subscriber.

3. Method according to Claim 2,
**characterized in that**
the communication link between the Proxy Node (PN) component and the Server Agent (SA) is established by means of the Mobile IP protocol, whereby the communication relationship in the foreign network (ISP x) is terminated by a Foreign Agent (FA) assigned to the Proxy Node (PN) component and in the home network by a Home Agent integrated into the Server Agent (SA).

4. Method in accordance with one of the Claims 2 or 3,
**characterized in that**
the terminal (T) is assigned the IP address provided by the Proxy Node (PN) component.

5. Method in accordance with one of the Claims 2 or 3, **characterized in that**
- the IP address provided is assigned to the Proxy Node component (PN),
- an IP address taken from the foreign network is assigned to the Terminal (T) by the Proxy Node (PN) component, and
- an address conversion between the requested IP address and the IP address taken from the foreign network is stored by the Proxy Node component and is used for communication.

6. Method in accordance with one of the Claims 1 to 5, **characterized in that**
the Server Agent (SA) is determined using the Domain Name System.

7. Server Agent (SA) in a home network of a mobile subscriber, featuring the following:
- Means for accepting a user identification which reflects a subscriber identity, from an Internet access component (UAS) of a foreign network via which an IP address for the subscriber is requested,
- Means for providing an IP address for the subscriber,
- Means for transmitting the IP address provided to the Internet access component (UAS), and
- Means for linking the IP address provided to the subscriber identity.

8. Server Agent in accordance with Claim 7,
**characterized by**
- An address pool (AP),
- Means for checking the authorization of the address request on the basis of the user identification and means for blocking the provision of an IP address if the authorization is missing and
- An association table for storing the link between subscriber identity and IP address.

9. Server Agent in accordance with Claim 8,
**characterized in that**
said address pool (AP) comprises real IP addresses which are addresses of real hosts present in the home network, and/or virtual addresses which are addresses without real hosts present in the home network, for dynamic address allocation.

10. , System to support mobility for a subscriber in the Internet, with the following features.
- a Terminal (T), which is assigned to a foreign network (ISP x) different from the home network of the subscriber and with which service availability is established for the subscriber, the Terminal (T) being equipped with means for accepting a user identification which reflects a user identity,
- an Internet access component (UAS), arranged in the foreign network (ISP x), with the following features:
- Means for making a request provided with a user identification for an IP address for the subscriber to a Server Agent (SA) in the home network of the subscriber, and
- Means to accept the IP address and
- A Server Agent (SA) in the home network of the subscriber, with the following features
- Means for accepting the user identification of the Internet access component (UAS),
- Means for providing an IP address for the subscriber,
- Means for transmitting the IP address provided to the Internet access component (UAS, - means for linking the IP address provided with the subscriber identity.

## Revendications

1. Procédé pour favoriser la mobilité d'un abonné dans l'Internet, la disponibilité d'un terminal (T) étant établie pour l'abonné, lequel terminal est attribué à un réseau (ISP x) étranger, différent d'un réseau nominal (HN) de l'abonné, comprenant les étapes procédurales suivantes :
- réception d'une authentification d'utilisateur par le terminal,
- formation d'une demande, avec laquelle une adresse IP est demandée pour l'abonné, et laquelle présente l'authentification d'utilisateur reflétant l'identité de l'abonné, au moyen d'une composante d'accès Internet (UAS) dans le réseau étranger,
- transmission de la demande à un agent serveur (SA) dans le réseau nominal de l'abonné,
- mise à disposition d'une adresse IP pour l'abonné au moyen de l'agent serveur (SA),
- transmission de l'adresse IP mise à disposition à la composante d'accès Internet (UAS), et
- liaison de l'adresse IP mise à disposition avec l'identité de l'abonné.

2. Procédé selon la revendication 1,
**caractérisé en ce que**
l'adresse IP mise à disposition est transférée à une composante Proxy Node (PN) attribuée au terminal (T), au moyen de laquelle une relation de communication avec l'agent serveur (SA) est ensuite établie dans le réseau nominal de l'abonné.

3. Procédé selon la revendication 2,
**caractérisé en ce que**
la relation de communication entre la composante Proxy Node (PN) et l'agent serveur (SA) est établie au moyen du protocole Mobile IP, la relation de communication étant terminée, dans le réseau étranger (ISP x), au moyen d'un agent étranger (FA) attribué à la composante Proxy Node (PN) et, dans le réseau nominal, au moyen d'un agent particulier intégré dans l'agent serveur (SA).

4. Procédé selon l'une quelconque des revendications 2 ou 3,
**caractérisé en ce que**
l'adresse IP mise à disposition est affectée au terminal (T) par la composante Proxy Node (PN).

5. Procédé selon l'une quelconque des revendications 2 ou 3,
**caractérisé en ce que**,
- l'adresse IP mise à disposition est affectée à la composante Proxy Node (PN),
- une adresse IP prise dans le réseau étranger est affectée au terminal (T) par la composante Proxy Node (PN), et
- une conversion d'adresses entre l'adresse IP demandée et l'adresse IP prise dans le réseau étranger est mémorisée par la composante Proxy Node et est utilisée pour la communication.

6. Procédé selon l'une quelconque des revendications 1 à 5,
**caractérisé en ce que**
l'agent serveur (SA) est déterminé à l'aide du système de nom de domaine.

7. Agent serveur (SA) dans un réseau nominal d'un abonné mobile, qui présente les caractéristiques suivantes :
- des moyens pour recevoir une authentification d'utilisateur, laquelle reflète une identité d'abonné, d'une composante d'accès Internet (UAS) d'un réseau étranger, au moyen de laquelle une adresse IP est demandée pour l'abonné,
- des moyens pour mettre à disposition une adresse IP pour l'abonné,
- des moyens pour transmettre l'adresse IP mise à disposition à la composante d'accès Internet (UAS), et
- des moyens pour lier l'adresse IP mise à disposition avec l'identité de l'abonné.

8. Agent serveur selon la revendication 7,
**caractérisé par**
- un pool d'adresses (AP),
- des moyens pour vérifier l'autorisation de la demande d'adresse à l'aide de l'authentification d'utilisateur et des moyens pour bloquer la mise à disposition d'une adresse IP en cas d'autorisation manquante, et
- un tableau d'association pour mémoriser la liaison entre l'identité de l'abonné et l'adresse.

9. Agent serveur selon la revendication 8,
**caractérisé en ce que**
ledit pool d'adresses (AP) comprend des adresses IP réelles, pour lesquelles il s'agit d'adresses pour des ordinateurs effectivement présents dans le réseau nominal, et/ou des adresses virtuelles, pour lesquelles il s'agit d'adresses sans ordinateur effectivement présent dans le réseau nominal, destinées à l'attribution dynamique d'adresses.

10. Système pour favoriser la mobilité d'un abonné dans l'Internet, qui présente les caractéristiques suivantes :
- un terminal (T), lequel est attribué à un réseau (ISP x) étranger, différent d'un réseau nominal de l'abonné, et avec lequel la disponibilité est établie pour l'abonné, le terminal (T) étant équipé de moyens pour recevoir une authentification d'utilisateur, laquelle reflète une identité d'abonné,
- une composante d'accès Internet (UAS), disposée dans le réseau étranger (ISP x), laquelle présente les caractéristiques suivantes :
- des moyens pour poser une demande d'une adresse IP, munie de l'authentification d'utilisateur, pour l'abonné à un agent serveur (SA) dans le réseau nominal de l'abonné, et
- des moyens pour recevoir l'adresse IP, et
- un agent serveur (SA) dans le réseau nominal de l'abonné, qui présente les caractéristiques suivantes :
- des moyens pour recevoir l'authentification d'utilisateur de la composante d'accès Internet (UAS),
- des moyens pour mettre à disposition une adresse IP pour l'abonné,
- des moyens pour transmettre l'adresse IP mise à disposition à la composante d'accès Internet (UAS),
- des moyens pour lier l'adresse IP mise à disposition avec l'identité de l'abonné.
